# EUROPEAN PATENT APPLICATION

(11) **EP 2 277 737 A1**
(43) Date of publication of application: **26.01.2011**
(21) Application number: 09166367.4
(22) Date of filing: 24.07.2009
(51) Int. Cl.: B60N 3/04, B60R 13/08

(54) **Acoustic flooring**

(71) Applicant: International Automotive Components Group GmbH, 47804 Krefeld (DE)
(72) Inventor: Grimes, Tim, 47804 Krefeld (DE); Marks, Phil, Newcastle, Staffs ST5 2EN (GB); Young, Adam, 47804 Krefeld (DE); Ashdown, Bob, Huntingdon, Cambs PE28 9LA (GB)
(74) Representative: Liesegang, Eva

(57) **Abstract**

The present invention provides a method of manufacturing a vehicle acoustic flooring for a vehicle floor surface, comprising the steps of: providing at least one carpet insert (10) and placing the carpet insert (10) into a forming tool (16); providing a thermoplastic base layer (12) and placing the base layer (12) into said forming tool (16) covering said carpet insert (10) to laminate the carpet insert to a surface of the base layer (12) forming a laminated structure; forming the base layer so as to bring the laminated structure into a shape corresponding to said vehicle floor surface to be covered by the flooring; wherein, in said laminated structure, only part of the surface of the base layer (12) is covered by carpet (10). The invention also provides for respective vehicle acoustic properties.

## Description

### Field of the Invention

The invention relates to an acoustic flooring and to a method of manufacturing an acoustic flooring, in particular a vehicle acoustic flooring.

### Background of the Invention

In the automotive industry, it is known to use flooring and floor mats for covering the floor board of an automobile both in the passenger cabin and in the luggage compartment. The flooring and floor mats are designed to protect the floor board from liquid and/or debris and to improve the appearance of the vehicle's interior. It is also known in the art to use acoustic floor mats and flooring, such as carpets, in the passenger and luggage compartments for controlling unwanted noises which may be transmitted from e.g. the engine, engine accessories, road surface, wind or the like.

In the automobile technology, noise and vibration characteristics of vehicles, also referred to as noise, vibration, and harshness (NVH), is to be controlled for passenger comfort. In particular, interior NVH deals with noise and vibration experienced by the occupants of the cabin. The sources of noise in a vehicle are many, including the engine, drivetrain, tire contact patch and road surface, brakes, and wind. Noise from cooling fans or heating, ventilating, and air conditioning (HVAC), the alternator, and other engine accessories is also fairly common. Many problems are generated as either vibration or noise, transmitted via a variety of paths, and then radiated acoustically into the cabin. These are classified as "structure-borne" noise. Others are generated acoustically and propagated by airborne paths. Such noise can be reduced through the use of NVH barrier materials.

Usually, carpet is provided over the entire interior area of the floor board for personal comfort and appearance and as a NVH material to exclude noise from outside of the passenger cabin. The carpet also serves as a thermal barrier to help maintaining comfortable interior climate in the vehicle. It is known to enhance the carpeting with a base layer selected for its ability to dampen noise and insulate against thermal flow.

When providing an acoustic flooring for a vehicle, i.e. a flooring which is adapted to provide an acoustic barrier and dampen noise, it has to be taken into account that the floor pan of a vehicle which supports the seating and interior luggage areas has a three-dimensional structure including various ribs, channels, recesses and humps which are necessary for providing structural strength and rigidity and for accommodating various structures, supports, conduits and cabling of the vehicle both under the floor pan and above. The acoustic flooring for covering the vehicle floor surface has to be adapted to the respective layouts of different vehicle models.

Different technologies have been developed for providing acoustic flooring: One is a carpet flooring made from a woven or non-woven fibrous material which is laminated to a mineral filled mass layer, heated and compression molded so as to shape the carpet in correspondence with the shape of the floor surface of the vehicle. Another approach uses a TPO (thermoplastic olefin) flooring made from a TPO layer which is also laminated to a mass layer but then heated and vacuum formed so as to provide a three-dimensional flooring structure which is configured to conform to the floor surface of the vehicle. It is also known to mold-in-place a foamed resin directly onto the back of the carpet in a mold adapted to the contour of a target floor pan. Example of prior art acoustic floorings and floor mats are described in WO 1997/027992 A1, JP 59001230 A, JP 7040483 A, JP 10071884 A, JP 1007886 A, JP 2005053339 A, US 6,953545 B1 and US 7,182,994 B1.

In general, in passenger carrying automobiles, a carpet flooring is preferable over a flooring made from a TPO layer due to its superior visual appearance. However, covering the complete floor surface of the vehicle with carpet is a significant cost factor in the vehicle manufacturing process.

It is therefore an object of the present invention to provide a vehicle acoustic flooring and a method for its manufacture which can achieve the advantages of a carpet flooring without incurring the associated costs.

### Summary of the Invention

The present invention provides an acoustic flooring and a method of its manufacture as defined in the claims.

The invention provides a method of manufacturing an acoustic flooring for a vehicle floor surface comprising the steps of: providing at least one carpet insert and placing the carpet insert into a forming tool; providing a thermoplastic base layer and placing the base layer into said forming tool, covering said carpet insert to laminate the carpet insert to a surface of the base layer thus forming a laminated structure; forming the base layer so as to bring the laminated structure into a shape corresponding to the shape of said vehicle floor surface to be covered by the flooring; wherein, in said laminated structure, only part of the surface of the base layer is covered by a carpet.

As discussed above, when a carpet acoustic flooring was used as NVH material in the prior art, all of the floor surface was covered with carpet, thus adding significantly to the costs of the vehicle manufacturing process. However, there are many areas of the vehicle which are not directly exposed to the passenger and luggage compartments and which are neither accessible nor visible to the driver and passengers of the vehicle. Some parts of the vehicle floor are covered by vehicle structures, such as the seating, which visually cover the floor pan but do not provide a satisfactory acoustic barrier.

The present invention provides for an acoustic flooring which is formed as a laminated structure wherein the complete floor surface can be covered by a base layer providing a NVH material, with carpet inserts laminated to the base layer in only those areas which are visible and accessible to the user of the vehicle. For example, areas under the seats and under the load floor board usually are not visible and, therefore, need not be covered by a carpet. The method of the present invention makes it possible to provide carpet only where it is visible and still have a continuous fully functional acoustic flooring covering the vehicle's floor surface. The main body of the acoustic flooring is made from the thermoplastic base layer having the necessary acoustic damping properties. According to the invention, carpet inserts are laminated to said base layer in those areas visible to the user, wherein lamination is performed at substantially the same time at which the base layer is shaped to match the surface contour of the vehicle's floor surface. With the method of the present invention, an intimate compound or laminate of the base layer and the carpet inserts is formed essentially at the same time and at the same processing stage at which the flooring is shaped to conform to the floor pan wherein the effort for manufacturing the acoustic flooring of the invention is not increased over that for manufacturing an acoustic flooring made from only carpet material or only TPO. The only additional processing step necessary is to place the carpet insert into the forming tool wherein bonding of the carpet insert and the base layer and shaping the base layer are performed in one go when the base layer is placed in the forming tool and a vacuum is applied for shaping the laminated structure. The invention makes it possible to place one or more small pieces of carpet on the base layer in an accurate position.

The resulting acoustic flooring has the same acoustic performance as any known noise vibration harshness (NVA) materials, provided by the base layer, wherein the carpet inserts are added for improving the visual appearance of the acoustic flooring. The present invention not only has the benefit of reducing the costs of manufacturing the acoustic flooring but also a weight reduction can be achieved because a large area of the flooring can be made without carpet. The manufacture of the laminated structure in the forming tool, preferably by vacuum forming, obviates the need for the use of adhesive and/or additional assembly steps.

In the preferred embodiment of the invention, the base layer is heated for laminating the carpet insert to the base layer and shaping the base layer as part of the laminated structure. The carpet insert preferably but not necessarily is formed; e.g. by compression forming, into a three-dimensional shape before it is placed into the forming tool. It is particularly advantageous when the carpet insert comprises a top layer and a backing layer, wherein the backing layer includes a bonding material, such as polyethylene, wherein said bonding material is activated by the heated base layer for laminating the carpet insert to the heated base layer. In this preferred embodiment, the pre-shaped carpet insert can be placed into the forming tool easily and precisely wherein the carpet inserts are registered by virtue of their shape conforming to the shape of the forming tool. Additional registration means can be used. The heated base layer is then placed over the carpet inserts and the surface of the forming tool, wherein the heated base layer is sufficiently soft and flexible to substantially conform to the surface structure of the forming tool including the carpet inserts. The bonding material of the carpet inserts is activated by the heated base layer and, by applying a vacuum, the carpet inserts are laminated to the base layer and the base layer is given the necessary three-dimensional shape. Preferably, the base layer is shaped by a vacuum forming process in a vacuum forming tool but the invention is not limited to vacuum forming. For example, the laminate can also be heated and compression molded.

In a particularly preferred embodiment, a foam layer is applied to the back surface of the base layer after closing the vacuum forming tool, i.e. after the base layer has been brought into the desired shape and the laminated structure has been generated. It is particularly advantageous when the foam layer is reaction injection molded onto the back surface of the base layer.

Therefore, in the preferred embodiment of the invention, the acoustic flooring is manufactured in a combined vacuum forming (VAC)/reaction injection molding (RIM) tool. In such a tool, the base layer, placed over the carpet inserts, is formed by applying a vacuum to the tool. Subsequently, while using the same tools, in a closed state, the foam layer is applied to the back surface of the base layer by reaction injection molding so that the foam layer comes in intimate contact with the base layer.

Reaction injection molding (RIM) is similar to injection molding except that the reaction occurs within the mold. The process uses thermosetting polymers, such as polyurethane, instead of thermoplastic polymers. Before injection of the polymer, two components are mixed which react in the mold to form a solid thermosetting polymer. The bi-component fluid has a low viscosity which allows an economic production of large parts requiring long flow paths. Instead of a closed tool RIM process, the invention can also provide the foam layer through other processes, such as open pouring or gluing.

In the vacuum forming (VAC) process, the base layer is heated to a forming temperature and stretched across the forming tool. The base layer can be shaped by a single-surface mold when it is tightly held against the mold and a vacuum is applied between the mold surface and the base layer. When a combined VAC/RIM process is used, the forming tool eventually will be closed so that the foam layer can be injected.

The present invention also provides an acoustic flooring comprising a thermoplastic base layer having a three-dimensional shape corresponding to a vehicle floor surface to be covered by the flooring, and at least one carpet insert laminated to the top surface of a part of the base layer so that only part of the top surface of the base layer is covered by the carpet. The acoustic flooring has all of the advantages discussed above.

Preferably, the carpet insert comprises a top layer and a backing layer, the backing layer comprising a bonding material, such as polyethylene, for laminating the carpet insert to the base layer. The top layer of the carpet insert can comprise piles of synthetic polymers, such as polyamide, polyester and polypropylene or any other suitable material for vehicle carpet. The base layer, on the other hand, is preferably made from thermoplastic polyolefin, in particular from a blend of ethylene vinyl acetate (EVA) and polypropylene (PP) with filler materials. This material provides for noise vibration harshness (NVH) suppression as desired in modern automobiles.

The function of the base layer is supported by a foam layer, in particular a PU foam layer which is preferably applied to the back surface of the base layer by reaction injection molding.

In the preferred embodiment of the acoustic flooring, a number of carpet inserts are placed in all areas which are visible and/or accessible to a user of the vehicle.

### Short Description of Drawings

The present invention is now described with reference to the attached drawings, in which:
- Fig. 1: shows a schematic sketch of a carpet insert;
- Fig. 2: shows a schematic sketch of an acoustic flooring including two carpet inserts according to the invention;
- Fig. 3: shows a sectional schematic view of the acoustic flooring of fig. 2, taken along a line A-A; and
- Figs. 4a to 4d: schematically show subsequent steps in the process of manufacturing a vehicle acoustic flooring according to the invention.

### Detailed Description of Embodiment

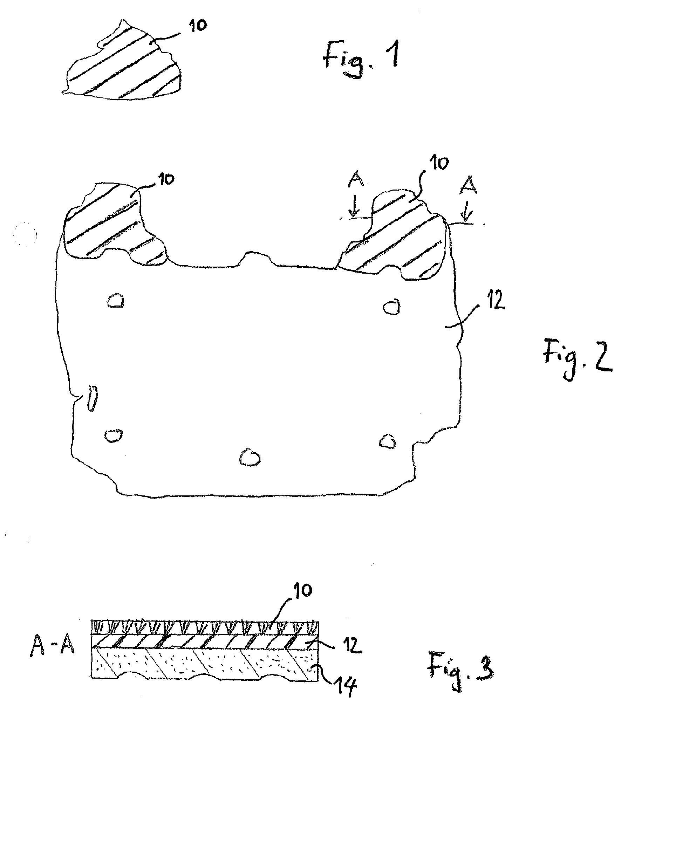

Fig. 1 schematically shows a carpet insert which is made from a carpet material comprising a plurality of tufts extending away from a backing to provide piles. The face layer of the carpet insert can comprise a non-woven material, e.g. needlepunch carpet, needlepunch felt or the like, woven fabric, porous material, tufted carpet or the like. The carpet can be provided to have a substantially continuous and substantially uniform face layer formed by piles. The piles are made from e.g. polyamide, polyester, polypropylene or the like. The backing layer can be made from polyethylene or another suitable thermoplastic polymer.

The carpet insert 10 can be preformed, e.g. by compression forming to be adapted to the profile of that part of a vehicle floor pan where the carpet insert shall come to lie within the vehicle acoustic flooring. Fig. 2 shows a schematic sketch of a complete vehicle acoustic flooring including two carpet inserts 10 and a base layer 12. In the example of fig. 2, the flooring is adapted to the structure of the area below and behind the rear-passenger seats where the flooring is visible only in the area of the wheelarches. The base layer 12 of the vehicle acoustic flooring, also referred to as "heavy layer", has a relatively high density in the region of 2Kg per cubic metre. The base layer 12 can be made from a mineral filled thermoplastic, e.g. from a blend of a thermoplastic polymer, for example ethylene vinyl acetate (EVA), polyethylene (PE) and polypropylene (PP) and a mineral filler for example calcium carbonate (CaCO3) and Barium Sulfate BaSO4. A typical blend ratio could be 20% thermoplastic polymer and 77% mineral filler, the remaining content could consist of processing oils and pigments.

Fig. 3 shows a schematic sectional view of the vehicle acoustic flooring of fig. 2, when taken along the line A-A in fig. 2. The flooring comprises the carpet insert 10 which is laminated to the base layer 12 wherein a foam layer 14 is applied to the back side of the base layer 12. The foam layer comprises of PU foam which is formed onto the back side of the base layer 12 by injection molding, reaction injection molding, pouring, adhesive bonding or any other suitable process.

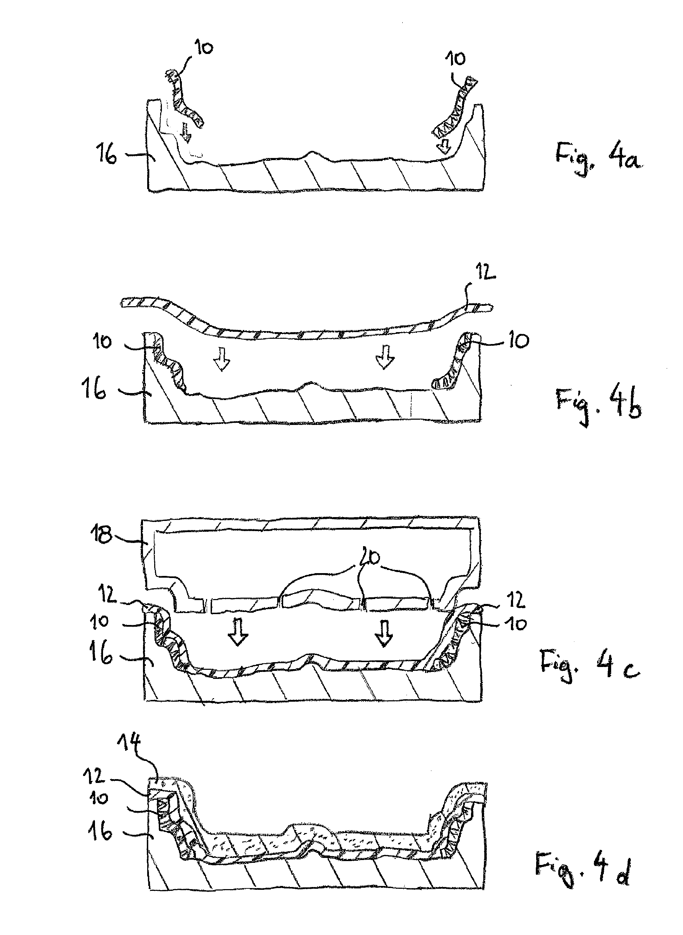

Figs. 4a to 4d schematically show a process for manufacturing a vehicle acoustic flooring according to the invention. In the preferred embodiment of the invention, this process is performed using a combined vacuum forming/reaction injection (VAC/RIM) tool. The tool comprises a lower vacuum forming mold 16 and an upper reaction injection mold 18. When manufacturing the vehicle acoustic flooring according to the preferred embodiment of the invention, first the carpet inserts 10 are formed from a carpet material comprising of carpet pile and a backing layer. The carpet inserts 10 are cut and if required formed, e.g. by compression forming, to have a predefined shape and profile. This profile is adapted to the surface structure of a floor pan area where carpet is to be provided. The carpet inserts 10 are inserted into the vacuum forming mold 16. There are accurately positioned by virtue of their shape conforming to the tool profile. Additional registration means can be used. This is shown schematically in fig. 4a.

The base layer 12, e.g. a TPO layer, is heated, e.g. to a temperature of e.g. 150°C The heated base layer 12 is soft, flexible and stretchable when it is placed over the vacuum forming mold 16, covering the backing layer of the carpet inserts 10 as shown in Fig. 4b. Subsequently, a vacuum is applied to the vacuum forming tool 16 so that the base layer 12 is brought into the desired shape and the carpet inserts 10 are laminated to the base layer 12. An intimate contact between the base layer 12 and the carpet inserts 10 is achieved through the backing layer of the carpet inserts 10, e.g. a layer containing polyethylene which is activated by the heated base layer 12

After the base layer 12 has been formed, it is moved into a reaction injection molding (RIM) booth where the reaction injection mold 18 is closed over the vacuum forming mold 16. This is shown in Fig. 4c. The reaction injection mold 18 comprises a number of holes 20 through which a thermosetting polymer is injected onto the back surface of the base layer 12 to form the foam layer 14. The foam layer 14 comprises e.g. PU foam. Instead of forming the foam layer 14 by reaction injection molding, injection molding using thermoplastic polymers, pouring or other suitable processes can be used.

After the foam has been injected onto the back side of the base layer it is allowed to set, the reaction injection mold 18 is then opened and the completed vehicle acoustic flooring is then removed from the mold. This is shown in Fig. 4d.

If necessary, the part is then cut around the edges to bring the flooring into its final shape. Cutting can be performed by water jet cutting, laser cutting, conventional knife cutting or any other suitable technology.

### Reference numbers

- 10: carpet insert
- 12: base layer
- 14: foam layer
- 16: vacuum forming mold
- 18: reaction injection mold
- 20: holes

## Claims

1. A method of manufacturing an acoustic flooring, in particular for a vehicle floor surface, comprising the steps of:
providing at least one carpet insert (10) and placing the carpet insert (10) into a forming tool;
providing a thermoplastic base layer (12) and placing the base layer (12) into said forming tool covering said carpet insert (10) to laminate the carpet insert (10) to a surface of the base layer (12) forming a laminated structure;
forming the base layer (12) so as to bring the laminated structure into a shape corresponding to said vehicle floor surface to be covered by the flooring;
wherein, in said laminated structure, only part of the surface of the base layer (12) is covered by carpet.

2. The method of claim 1,
wherein the base layer (12) is heated for laminating the carpet insert (10) to the base layer (12) and shaping the base layer (12) as part of the laminated structure.

3. The method of one of claims 1 and 2,
wherein the carpet insert (10) is formed into a three-dimensional shape before it is placed into the forming tool.

4. The method of one of the preceding claims,
wherein said carpet insert (10) comprises a top layer and a backing layer, the backing layer comprising a bonding material, such as polyethylene, and wherein said bonding material is activated by the heated base layer (12) for laminating the carpet insert (10) to the heated base layer (12).

5. The method of one of the preceding claims,
wherein the base layer (12) is shaped by vacuum forming in a vacuum forming tool.

6. The method of one of the preceding claims,
wherein a foam layer (14) is applied to the back surface of the base layer (12) after closing the forming tool.

7. The method of claims 6,
wherein the foam layer (14) is reaction injection molded onto the back surface of the base layer (12).

8. An acoustic flooring, in particular for a vehicle, comprising:
a thermoplastic base layer (12) having a three-dimensional shape corresponding to a vehicle floor surface to be covered by the flooring;
at least one carpet insert (10) laminated to the top surface of a part of the base layer (12) so that only part of the top surface of the base layer (12) is covered by carpet.

9. The acoustic flooring of claim 8,
wherein said carpet insert (10) comprises a top layer and a backing layer, the backing layer comprising a bonding material, such as polyethylene, for laminating the carpet insert (10) to the base layer (12).

10. The acoustic flooring of claim 9,
wherein the top layer of the carpet insert (10) comprises piles of synthetic polymer, such as polyamide, polyester and polypropylene.

11. The acoustic flooring of one of the claims 8 to 10,
wherein the base layer (12) is made from a thermoplastic material, in particular from a blend of EVA, PP or PE with mineral filler materials.

12. The acoustic flooring of one of the claims 8 to 11,
wherein a foam layer (14), in particular a PU foam layer (14), is applied to the back surface of the base layer (12).

13. The acoustic flooring of claims 12,
wherein the foam layer (14) is applied to the back surface of the base layer (12) by injection molding.

14. The acoustic flooring of one of claims 8 to 13,
wherein a plurality of carpet inserts (10) are laminated to the top surface of the base layer (12).
